Europäisches Patentamt

European Patent Office

Office européen des brevets

(19)

(11) Veröffentlichungsnummer : **0 175 279**
**B1**

(12)

# EUROPÄISCHE PATENTSCHRIFT

(45) Veröffentlichungstag der Patentschrift :
23.11.89

(21) Anmeldenummer : 85111509.7

(22) Anmeldetag : 11.09.85

(51) Int. Cl.⁴ : **G 01 N 33/00**, G 01 N   1/22,
**G 05 D 16/06**

(54) **Gasmengenregler für Gase mit kondensierbaren Anteilen.**

(30) Priorität : 15.09.84 DE 3434024

(43) Veröffentlichungstag der Anmeldung :
26.03.86 Patentblatt 86/13

(45) Bekanntmachung des Hinweises auf die Patenterteilung : 23.11.89 Patentblatt 89/47

(84) Benannte Vertragsstaaten :
CH DE FR GB Li

(56) Entgegenhaltungen :
EP—A— 0 118 911
DE—A— 2 334 348
DE—A— 2 755 703
GB—A— 2 097 531
US—A— 4 191 541

(73) Patentinhaber : **Kernforschungsanlage Jülich Gesellschaft mit beschränkter Haftung
Postfach 1913
D-5170 Jülich 1 (DE)**

**Brooks Instrument Zweigniederlassung Elmshorn der
Emerson Electric GmbH, Waiblingen
Max-Planck-Strasse 8
D-2200 Elmshorn (DE)**

(72) Erfinder : **Fürst, Leander
Heinsberger Strasse 10
D-5170 Jülich (DE)**
Erfinder : **Ballast, Johan Th. G.
Groeneveldselaan 6
Veenendaal (NL)**
Erfinder : **Jahnel, Kurt
Itterstrasse 168
D-4000 Düsseldorf-Itter (DE)**

## Beschreibung

Die Erfindung bezieht sich auf einen Gasmengenregler für Gase mit kondensierbaren Anteilen mit einer federbelasteten Membran, die als Begrenzung einer Zuströmkammer dem Druck des zuströmenden Gases unterliegt und ein Zulaßventil steuert sowie einer Drosselstelle am Ausgang des Reglers.

Für die Regelung der Durchflußmengen von Flüssigkeiten und Gasen kennt man Membranmengenregler, bei denen der Durchlaß eines Regelventils durch eine (einstellbar) federbelastete nachgiebige Membran derart gesteuert wird, daß bei erhöhter Fluidzufuhr der Durchlaßquerschnitt des Ventils vermindert wird. Diese Membran begrenzt einen Raum, in den das Fluid über das Regelventil gelangt und der mit einer Drosselstelle in Verbindung steht, über die das Fluid abströmt.

Ein solcher Regler ist beispielsweise aus dem DE-GM 16 56 212 bekannt, bei dem als Drosselstelle ein Reduzierventil vorgesehen ist, das abströmseitig zum Raum über der Membran und einem damit in Verbindung stehenden Mengenmesser nach dem Schwebekörperprinzip führt. Mit dieser zusätzlichen Einrichtung wird die Einstellgenauigkeit verbessert.

Ein ähnlicher Regler ist aus der DE-OS 21 55 323 zu entnehmen, der allerdings keinen Mengenmesser aufweist. Ein weiterer Membranmengenregler der genannten Art ist in der DE-OS 23 34 348 beschrieben, bei dem eine Druckstößen entgegenwirkende Dämpfung der Ventilbewegung mittels eines durch die Membran hindurchgeführten, mit der Zuströmseite in Verbindung stehenden Ausgleichsgliedes, insbesondere in Form eines Dämpfungskolbens, vorgesehen ist.

Aus der FR-OS 23 49 084 ist schließlich ein Membranmengenregler bekannt, bei dem die auf die Membran wirkende Feder durch eine Art Blattfeder gebildet wird und ein stößelförmiger Verbindungskörper durch die Membran hindurchgreifend auf das Regelventil einwirkt. Ausgangsseitig ist als Drosselstelle eine feine Blende vorgesehen, hinter der eine Überbrückung zum Raum über der Membran abzweigt. Dieser Regler ist für die Regelung sehr geringer Durchflußmengen bei Niederdruckfluiden geeignet.

Alle diese bekannten Regler setzen bei Verwendung als Gasmengenregler Gase voraus, die sich während des Regelvorganges in ihrer Konsistenz nicht verändern, d. h. nicht auskondensieren, da anderenfalls die Funktionsweise der Regeleinrichtung durch gebildete Kondensate gestört würde. Ferner träten durch Kondensation unbestimmter Anteile irreguläre Variationen in der Zusammensetzung auf, was insbesondere bei nicht gleichbleibender Gaszusammensetzung problematisch wäre. Schließlich können zusätzliche Auswascheffekte durch gebildetes Kondensat hervorgerufen werden.

Aufgabe der Erfindung ist daher die Entwicklung eines Gasmengenreglers der eingangs genannten Art, von dem trotz schwankender Anteile an kondensierbaren und ggf. kondensatlöslichen Komponenten des zuströmenden Gases eine konstante Gasmenge bei gleichbleibendem Druck abgegeben wird und gebildete Kondensate vorzugsweise unmittelbar mit dem Gas, aus dem sie ausgeschieden wurden, in nachgeordnete Bereiche gelangen, so daß deren Anteil im wesentlichen der ursprünglichen Gaszusammensetzung entspricht.

Dieses Ziel wird erfindungsgemäß durch einen Gasmengenregler der eingangs genannten Art erreicht, der gekennzeichnet ist durch eine für die Kondensation der kondensierbaren Anteile bis auf einen wählbaren Restdruck sorgende, allgemein vertikal angeordnete gekühlte Kondensationsstrecke zwischen Zuströmkammer und Drosselstelle, von der alles gebildete Kondensat unmittelbar durch Schwerkraftwirkung über die Drosselstelle in den der Regelung unterworfenen Bereich gelangt.

Zur Vermeidung unerwünschter Kondensation müssen die Bauteile vor der Kondensationsstrecke auf einer Temperatur über dem Taupunkt gehalten werden.

Mit dieser Anordnung werden druck- und mengenkonstant Gase abgegeben, wobei gebildetes Kondensat mit löslichen Anteilen praktisch ohne Verzögerung in flüssiger Form mit dem Gas mitgeführt wird und in den unmittelbar anschliessenden Bereich, wie insb. einen Analysator gelangt.

Ein solcher Mengenregler wird insbesondere in Verbindung mit einer polarographischen Meßzelle zur Bestimmung von $SO_2$ in Gasen benötigt, die eine vom zuströmenden Gas betriebene interne Elektrolytumwälzung nach dem Mammutpumpenprinzip aufweist.

Polarographische Meßzellen reagieren empfindlich auf alle Änderungen der Bedingungen, wobei insbesondere die Notwendigkeit besteht, die interne Elektrolytumwälzung konstant zu halten. D. h., der Zelle müssen mithin konstante Gasmengen unter konstantem Druck zugeführt werden.

Gasgemische, insbesondere Rauchgase von Kaminen, deren Überwachung z.Zt. ein besonderes Anliegen ist, enthalten veränderliche Anteile an Wasserdampf, dessen Kondensation im Analysengerät zu Schwankungen der nichtkondensierbaren Restgasmenge führt, die für die Elektrolytumwälzung verantwortlich ist. Würde man, um diesem Problem zu begegnen, eine Kühlstrecke vor dem Gasmengenregler vorsehen, so würde wegen der Löslichkeit des Schwefeldioxids in Wasser ein unkontrollierter Anteil desselben für die Analyse verlorengehen. Auch kann das Regelgerät nicht an den Ausgang des Analysenteils angeschlossen werden, da der Gasdruck hinter dem Analysator, der bei etwa Atmosphärendruck arbeitet, für die Funktion von Reglern nicht ausreicht.

Obgleich der Gasmengenregler für den Betrieb eines mit Elektrolytumlauf arbeitenden polarographischen SO$_2$-Analysators (wie er in der DE-Patentanmeldung P 33 08 888.8-51 beschrieben wird) entwickelt wurde und in der Beschreibung vornehmlich auf diesen Verwendungszweck Bezug genommen wird, dürfte klar sein, daß die erfindungsgemäße Anordnung für jedes andere System mit kondensierbaren Anteilen, beispielsweise organischen Lösungsmitteln, brauchbar ist.

Nachfolgend wird die Erfindung anhand eines Ausführungsbeispiels unter Bezugnahme auf die angefügte Zeichnung beschrieben.

Diese zeigt den Gasmengenregler mit einem Gehäuse 1, mit einer Zuströmkammer 2, die durch eine Membran 3 begrenzt wird, welche der Wirkung einer Feder 4 unterliegt. Diese Membran unterliegt dem Druck des bei 5 zuströmenden Gases und steuert die durch Bohrung 6, Stößel 7, Kugel 8 und Feder 9 gegebene Durchlaßöffnung für den Gaszutritt.

Unmittelbar mit der Zuströmkammer 2 steht eine senkrechte Kühlstrecke 10 in Verbindung, die so bemessen ist, daß der Partialdruck der kondensierbaren Anteile durch spontanes Auskondensieren bei einem der Minimaltemperatur des der Regelung unterliegenden Bereichs entsprechenden Dampfdruck gehalten wird. An die Kühlstrecke 10 schließt sich eine für die Druckbelastung der Membran notwendige Drosselstelle in Form eines Regulierventils 11 an. Statt des Ventils 11 könnte auch ein Kapillarrohr oder eine beliebig andere Verengung vorgesehen sein. Die Kühl- oder Kondensationsstrecke 10 hat einen Kühlmantel 12, der insbesondere in den Elektrolytkreislauf des SO$_2$-Analysators einbezogen ist.

Die senkrechte Kondensationsstrecke wird vorzugsweise durch ein Kühlrohr mit einem Innendurchmesser von etwa 5 bis 15 mm und einer Länge von 5 bis 15 cm gebildet.

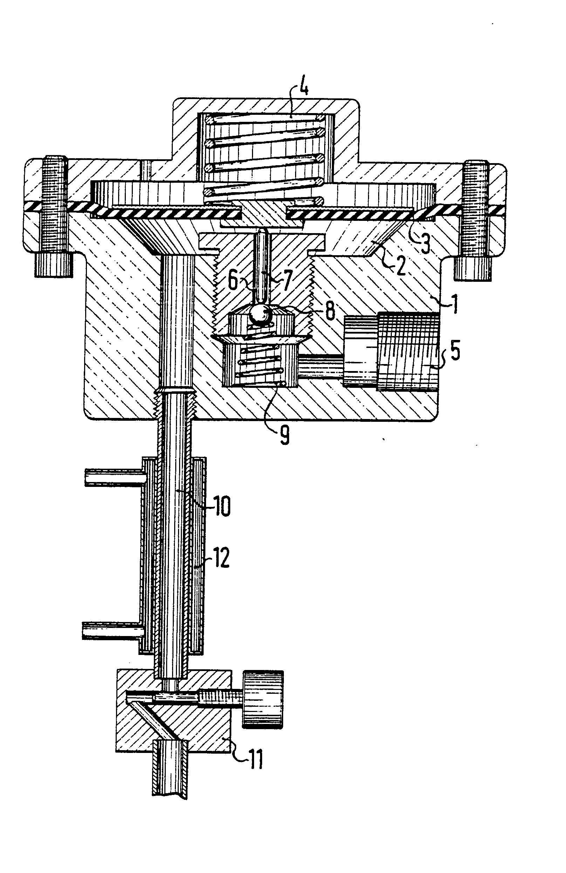

## Patentansprüche

1. Gasmengenregler für Gase mit kondensierbaren Anteilen mit einer federbelasteten Membran (3), die als Begrenzung einer Zuströmkammer (2) dem Druck des zuströmenden Gases unterliegt und ein Zulaßventil (6-9) steuert sowie einer Drosselstelle (11) am Ausgang des Reglers, gekennzeichnet durch eine für die Kondensation der kondensierbaren Anteile bis auf einen wählbaren Restdruck sorgende, allgemein vertikal angeordnete gekühlte Kondensationsstrecke (10) zwischen Zuströmkammer (2) und Drosselstelle (11), von der alles gebildete Kondensat unmittelbar durch Schwerkraftwirkung über die Drosselstelle (11) in den der Regelung unterworfenen Bereich gelangt.

2. Gasmengenregler nach Anspruch 1 in Verbindung mit einer elektrolytdurchströmten polarographischen Meßzelle mit Rückführung des Elektrolyten über eine Reinigungsstrecke, dadurch gekennzeichnet, daß die Kühlung der Kondensationsstrecke (10) in den Elektrolytkreislauf einbezogen ist.

3. Gasmengenregler nach Anspruch 1 oder 2, dadurch gekennzeichnet, daß die Kondensationsstrecke (10) durch ein senkrechtes Kühlrohr mit einem Innendurchmesser von etwa 5 bis 15 mm und einer Länge von 5 bis 15 cm gebildet wird.

## Claims

1. Gas flow controller for gases with condensable components, having a spring-loaded diaphragm (3) which, constituting a boundary of an inflow chamber (2), is subjected to the pressure of the inflowing gas and controls an inlet valve (6-9), and also a throttling element (11) at the outlet of the controller, characterised by a cooled condensation section (10) between inflow chamber (2) and throttling element (11) which section is arranged in an in general vertical direction and effects the condensation of the condensable components up to a selectable residual pressure, all formed condensate passing directly out of said section by gravitational force through the throttling element (11) into the region subjected to control.

2. Gas flow controller according to claim 1 in conjunction with a polarographic measuring cell having electrolyte throughflow, with return of the electrolyte through a cleaning section, characterised in that the cooling of the condensation section (10) is included in the electrolyte circulation system.

3. Gas flow controller according to claim 1 or 2, characterised in that the condensation section (10) is formed of a vertical cooling tube having an internal diameter of approximately 5 to 15 mm and a length of 5 to 15 cm.

## Revendications

1. Régulateur de débit pour des gaz dont des parties peuvent se condenser, comprenant une membrane (3) qui est chargée par un ressort, qui en servant à délimiter une chambre d'admission (2) est soumise à la pression du gaz affluent et qui commande une soupape d'admission, ainsi qu'un point d'étranglement (11) à la sortie du régulateur, caractérisé par une zone de condensation (10) qui est refroidie, qui est d'une manière générale verticale, qui est interposée entre la chambre d'admission (2) et le point d'étranglement (11), qui sert à condenser les parties qui peuvent l'être jusqu'à une pression résiduelle que l'on peut choisir et de laquelle tout le produit condensé formé parvient directement, par la force de gravité et en passant par le point d'étranglement (11), dans la région soumise à la régulation.

2. Régulateur de débit suivant la revendication 1, en liaison avec une cellule de mesure polarographique dans laquelle passe un électrolyte avec recyclage de l'électrolyte par une zone d'épuration, caractérisé en ce que le refroidissement de la zone de condensation (10) est inclus dans le circuit de l'électrolyte.

3. Régulateur de débit suivant la revendication 1 ou 2, caractérisé en ce que la zone de condensation (10) est formée d'un tube de refroidissement vertical ayant un diamètre intérieur de 5 à 15 mm environ et une longueur de 5 à 15 cm.